# EUROPÄISCHE PATENTSCHRIFT

(11) **EP 1 818 282 B1**
(45) Veröffentlichungstag und Bekanntmachung des Hinweises auf die Patenterteilung: **10.06.2009**
(21) Anmeldenummer: 07101911.1
(22) Anmeldetag: 09.09.2005
(51) Int. Cl.: B65G 1/08, B65G 1/04

(54) **Verfahren zum Auslagern von Stückgütern aus einem automatisierten Stückgut-Lager**
Method for releasing piece goods in an automated cargo warehouse
Procédé de déstockage de marchandises au détail d'un entrepôt de marchandises au détail automatisé

(43) Veröffentlichungstag der Anmeldung: 15.08.2007
(62) Teilanmeldung aus: 05019718.5
(73) Patentinhaber: Rowa Automatisierungssysteme GmbH, 53539 Kelberg (DE)
(72) Erfinder: Hellenbrand, Christoph, 56761 Kaifenheim (DE); Groß, Dietmar, 53539 Kelberg (DE)
(74) Vertreter: Schmidt, Frank-Michael

(56) Entgegenhaltungen:
- WO-A-03/018443
- DE-A1- 4 336 885
- DE-A1- 19 635 396

## Beschreibung

Die Erfindung betrifft ein Verfahren für ein automatisiertes Lager für eine Vielzahl unterschiedlicher Stückgüter. Insbesondere betrifft die Erfindung ein Verfahren zum Auslagern von Stückgütern aus einem derartigen Lager.

Automatisierte Lager für eine Vielzahl unterschiedlicher Stückgüter werden beispielsweise in Apotheken oder im Pharmaziegroßhandel eingesetzt, um Arzneimittelpackungen zu lagern. Hierbei dominieren zwei Lagerkonzepte: Regallager und Schachtlager.

Bei automatisierten Regallagern, wie sie beispielsweise aus der Patentschrift DE 195 09 951 C2 bekannt sind, werden die Arzneimittelpackungen auf ebenen Lagerflächen abgelegt, wobei die Lagerflächen von Regalböden oder Schubladenböden gebildet werden. Die Arzneimittelpackungen werden in der Regel einzeln von einem oder mehreren Bediengeräten von einer Einlagerungsstation zu dem gewünschten Lagerort auf dem Regalboden transportiert und später - bei ihrer Auslagerung - von dem Lagerplatz im Regalboden entnommen und zu einer Abgabestelle transportiert. Die Regallager sind vorzugsweise chaotisch organisiert, das heißt, auf jedem Regalboden lagern unterschiedliche Arzneimittelpackungen nebeneinander, wobei eine größtmögliche Packungsdichte (Flächenbelegungsdichte) angestrebt wird. Derartige Regallager werden insbesondere dort eingesetzt, wo eine große Vielzahl unterschiedlicher Arzneimittelpackungen jeweils nur in geringer Stückzahl ein- und ausgelagert werden, beispielsweise im Apothekenbereich.

Aus der DE 196 35 396 A1 ist ein Regallagersystem mit einem Bediengerät bekannt. Das Bediengerät hat eine Greifvorrichtung zum Entnehmen von Stückgütern aus den Regalen und ist verfahrbar vor den Regalböden angeordnet.

Das bekannte Lager weist einen Einlagerungsbereiche auf, dessen Schächte jeweils mit einer freigebbaren Sperre versehen sind. Als Bediengerät sind Sauggreifer vorgesehen, welche die in den Schächten gelagerten Artikel über die Sperre heben können. Die Auslagerung der Stückgüter erfolgt bei dem bekannten Lager so, dass die der Sperre nächsten Stückgüter ausgelagert werden und einer Abgabestelle übergeben werden.

Die DE 24 07 756 beschreibt eine Vorrichtung zum Auslagern von Stückgütern aus einem Regalsystem. Eine Entnahmevorrichtung ist dazu im gleichen Winkel geneigt wie die Lageschächte des Regalsystems.

Die WO 03/018443 A1 offenbart ein Regallager, bei dem in den Regalfächern Schieber angeordnet sind. Die Schieber ermöglichen eine Auslagerung der in den Regalfächern befindlichen Stückgüter.

Bei Schachtlagern werden die Arzneimittelpackungen in geneigten Lagerschächten gehalten, wobei die Arzneimittelpackungen an einem oberen Ende des Lagerschachts eingefüllt und am unteren Ende des Lagerschachts entnommen werden können. Zwischen Einlagerung und Auslagerung rutschen die Arzneimittelpackungen den Lagerschacht hinab. In jedem Lagerschacht werden mehrere gleichartige Arzneimittelpackungen hintereinander gelagert. Für jede Arzneimittelpackungsart gibt es einen Lagerschacht. Die Dimensionen der Lagerschächte sind an die Dimensionen der Arzneimittelpackungen angepaßt. Derartige Lager werden insbesondere dort verwendet, wo Arzneimittelpackungen einer vorgegebenen Art und Abmessung häufig und vorzugsweise zu mehreren Packungen gleichzeitig eingelagert und ausgelagert werden. Beispielsweise werden derartige Lagersysteme im Großhandel eingesetzt.

Es gibt auch kombinierte Lagersysteme, bei denen der Lagerautomat gleichzeitig Regallager und Lagerschächte aufweist. Bei diesen bekannten Anordnungen werden die Arzneimittelpackungen von einem Bediengerät in die Regallager ein- und ausgelagert und darüber hinaus in die Lagerschächte eingelagert (das heißt, von dem Bediengerät in die jeweils oberen Enden der Lagerschächte eingefüllt). An ihrem unteren Ende weisen die Lagerschächte eine zusätzliche Entnahmevorrichtung auf. Die Lagerschächte enthalten jeweils gleichartige Arzneimittelpackungen. Bei diesem Mischkonzept werden die seltener und in geringerer Stückzahl benötigten Arzneimittelpackungen in dem Regallager und die häufig und in größerer Stückzahl benötigten Arzneimittelpackungen in den Schächten gelagert.

Ein automatisiertes Lager für eine Vielzahl unterschiedlicher Stückgüter weist mehrere geneigte Lagerschächte auf. Unter einem Lagerschacht soll hier irgendeine langgestreckte Aufnahme für mehrere in der geneigten Ebene (diese könnte auch in der Neigungsrichtung gekrümmt und/oder zusätzlich quer zur Neigungsrichtung geneigt sein) hintereinander angeordnete Stückgüter verstanden werden. Diese Aufnahme weist eine Auflagefläche, die auch von einem Gitter oder von Schienen gebildet sein kann, und seitliche Begrenzungen, die beispielsweise durch Wände oder Schienen gebildet werden, auf. Die Ausbildung und Abmessung der Lagerschächte kann an die zu lagernden Stückgüter angepaßt sein. Die Stückgüter sind vorzugsweise quaderförmig, können aber auch zylindrisch sein, beispielsweise die Form von Flaschen annehmen. Die unterschiedlichen Stückgüter haben auch unterschiedliche Abmessungen. Jeder Lagerschacht weist an seinem unteren Ende eine erste Sperre zum Halten der in dem Lagerschacht liegenden Stückgüter auf. Die Sperre kann beispielsweise eine einfache starre Anschlagkante sein oder einen automatisch angesteuerten, in den Boden des Schachts versenkbaren Haltefinger umfassen. Das automatisierte Lager weist ferner ein in wenigstens zwei Raumrichtungen verfahrbares Bediengerät auf. Das Bediengerät ist bei einer bevorzugten Ausführungsform in drei Raumrichtung verfahrbar, jedoch genügt eine Verfahrbarkeit in zwei Raumrichtungen bei entsprechender Anordnung der Lagerschächte (wenn beispielsweise sämtliche unteren Enden der Lagerschächte entlang einer Linie angeordnet sind). Es können auch zwei oder mehr Bediengeräte vorgesehen sein. Das Bediengerät weist wenigstens einen geneigten Pufferschacht auf, der mehrere Stückgüter aufnehmen kann, wobei der Pufferschacht an das untere Ende eines Lagerschachts derart heranfahrbar ist, daß er nach einem Freigeben der ersten Sperre aus dem Lagerschacht austretende Stückgüter aufnehmen kann. Der Pufferschacht weist an seinem unteren Ende eine zweite Sperre zum Halten der in dem Pufferschacht liegenden Stückgüter auf. Der Pufferschacht kann in gleicher Weise wie ein Lagerschacht ausgebildet sein. Das Bediengerät weist ferner eine Vorrichtung zum Hinauffördern von in dem Pufferschacht einliegenden Stückgütern nach oben in einen Lagerschacht auf. Die zweite Sperre zum Halten der in dem Pufferschacht liegenden Stückgüter kann beispielsweise Bestandteil der Vorrichtung zum Hinauffördern sein. Außerdem weist das Bediengerät eine weitere Einrichtung zur Aufnahme wenigstens eines Stückguts auf.

Aufgabe der Erfindung ist es, ein verbessertes Verfahren zur Auslagerung von Arzneimittelpackungen oder anderen Stückgütern unterschiedlicher Art in einem einheitlichen Lagerkonzept bereitzustellen.

Diese Aufgabe wird erfindungsgemäß durch ein Verfahren zum Auslagern wenigstens eines Stückguts aus einem automatisierten Lager mit den Merkmalen des Anspruchs 1 gelöst.

Ein vorstehend beschriebenes automatisiertes Lager unter Anwendung des erfindungsgemässen Verfahrens ermöglicht eine Lagerung von unterschiedlichen Stückgütern innerhalb desselben Lagerschachts.

Bei dem erfindungsgemäßen Verfahrens zum Auslagern wenigstens eines Stückguts aus einem automatisierten Lager für eine Vielzahl unterschiedlicher Stückgüter wird zunächst ein in wenigstens zwei Raumrichtungen verfahrbares Bediengerät, das wenigstens zwei geneigte Pufferschächte aufweist, derart an einen von mehreren geneigten Lagerschächten, die jeweils an ihrem unteren Ende eine erste Sperre zum Halten der in dem Lagerschacht liegenden Stückgüter aufweisen, herangefahren, daß sich das obere Ende eines ersten Pufferschachts an dem unteren Ende desjenigen Lagerschachts befindet, in dem sich das auszulagernde Stückgut, jedoch nicht an der untersten Position, befindet. Dann wird die erste Sperre des Lagerschachts derart freigegeben, daß sich das bzw. die unterhalb des auszulagernden Stückguts in dem Lagerschacht befindenden Stückgüter in den ersten Pufferschacht bewegen, so daß das auszulagernde Stückgut an die unterste Position des Lagerschachts rutscht. Dann wird das Bediengerät derart an den Lagerschacht herangefahren, daß sich das obere Ende der weiteren Einrichtung zur Aufnahme an dem unteren Ende des Lagerschacht befindet. Erneut wird die erste Sperre derart freigegeben, daß sich das auszulagernde Stückgut (und gegebenenfalls weitere auszulagernde Stückgüter, die sich unmittelbar dahinter befinden) in die Einrichtung zur Aufnahme bewegt. Anschließend wird das Bediengerät zu einer Abgabestelle gefahren und das wenigstens eine auszulagernde Stückgut aus der Einrichtung entlassen oder entnommen. Vor oder nach diesem letztgenannten Schritt können die in dem ersten Pufferschacht befindlichen, nicht auszulagernden Stückgüter wieder in denselben oder auch einen anderen Lagerschacht zurückgeschoben werden.

Bei einer vorteilhaften Weiterbildung der Erfindung ist die weitere Aufnahme des Bediengeräts als Pufferschacht ausgebildet. Beispielsweise sind zwei Pufferschächte übereinander oder nebeneinander angeordnet. Die zweiten Sperren sind vorzugsweise freigebbar, so daß die in den Pufferschächten einliegenden Stückgüter nach unten austreten können. Es ist auch denkbar, daß von mehreren Pufferschächten des Bediengeräts nur ein Teil mit einer freigebbaren zweiten Sperre und/oder nur ein Teil mit einer Vorrichtung zum Hinauffördern von in dem Pufferschacht einliegenden Stückgütern ausgestattet ist. Bei einem Bediengerät mit zwei Pufferschächten ist es beispielsweise vorgesehen, daß ein Pufferschacht eine freigebbare zweite Sperre und der andere Pufferschacht eine nicht-freigebbare Sperre (z.B. einen Anschlag), aber eine Vorrichtung zum Hinauffördern aufweist. Bei einer anderen Ausführungsform weist das Bediengerät zwei Pufferschächte auf, die eine Vorrichtung zum Hinauffördern aufweisen, die als Schieber ausgeführt ist, der gleichzeitig die zweite Sperre bildet. Ein Bediengerät mit zwei Pufferschächten ermöglicht eine schnellere Entnahme eines Stückguts, welches sich beispielsweise nicht an der untersten Position eines Lagerschachts befindet. Zum Auslagern dieses Stückguts wird ein erster Pufferschacht des Bediengeräts an das untere Ende des Lagerschachts herangefahren. Dann werden die nicht auszulagernden Stückgüter, welche sich unterhalb des gewünschten auszulagerndes Stückguts befinden, in den ersten Pufferschacht übernommen. Anschließend wird der zweite Pufferschacht an das untere Ende des Lagerschachts herangefahren und übernimmt das gewünschte auszulagernde Stückgut. Dieser Vorgang kann auch wiederholt werden, wobei in dem einen Pufferschacht die nicht auszulagernden Stückgüter und in dem anderen Pufferschacht die auszulagernden Stückgüter gesammelt werden. Nachdem die auszulagernden Stückgüter in dem zweiten Pufferschacht gesammelt worden sind, werden entweder zunächst die nicht auszulagernden Stückgüter aus dem ersten Pufferschacht in den Lagerschacht zurückgeschoben und anschließend die auszulagernden Stückgüter zur Abgabestation transportiert oder zunächst die auszulagernden Stückgüter zur Abgabestation transportiert und anschließend das Bediengerät zum Lagerschacht zurückgefahren und die nicht auszulagernden Stückgüter in den Lagerschacht zurückgeschoben.

Es können auch mehrere Bediengeräte vorgesehen sein. Beispielsweise ist es auch denkbar, daß die oben für ein Bediengerät mit zwei Pufferschächten beschriebenen Abläufe von zwei Bediengeräten mit jeweils einem Pufferschacht übernommen werden. Eine alternative Zwischenlösung bestünde darin, ein Bediengerät mit zwei Pufferschächten zu verwenden, bei dem die Pufferschächte relativ zueinander bewegbar sind.

Vorzugsweise ist das Bediengerät an ein oberes Ende wenigstens eines weiteren Lagerschachts heranfahrbar, wobei nach Freigabe der zweiten Sperre in dem Pufferschacht einliegende Stückgüter in den weiteren Lagerschacht eintreten können. Die weiteren Lagerschächte sind vorzugsweise parallel derart angeordnet, daß deren obere Enden in einer Ebene angeordnet sind. An den unteren Enden der weiteren Lagerschächte befindet sich vorzugsweise eine Entnahmevorrichtung, die aus den weiteren Lagerschächten austretende Stückgüter auf eine Fördereinrichtung ausgibt. Bei dieser bevorzugten Ausführungsform werden die oberhalb des Bediengeräts angeordneten Lagerschächte vorzugsweise zur Lagerung solcher Stückgüter verwendet, die weniger häufig und in geringen Stückzahlen ausgelagert werden, während die weiteren Lagerschächte, welche von oben von dem Bediengerät befüllt werden können und die Stückgüter nach unten auf eine Fördereinrichtung ausgeben, vorzugsweise zur Lagerung häufiger und in größeren Stückzahlen benötigter Stückgüter verwendet werden. Die zum Bediengerät hin abfallenden Lagerschächte lagern vorzugsweise jeweils verschiedenartige Stückgüter, während die vom Bediengerät weg abfallenden weiteren Lagerschächte vorzugsweise jeweils Stückgüter der gleichen Art enthalten.

Vorteilhafte und/oder bevorzugte Weiterbildungen der Erfindung sind in den Unteransprüchen gekennzeichnet.

Im folgenden wird die Erfindung anhand eines in den Zeichnungen dargestellten bevorzugten Ausführungsbeispiels näher erläutert. In den Zeichnungen zeigen:
Figur 1 eine schematische Seitenansicht eines Bediengeräts mit zwei geneigten Pufferschächten in Zuordnung zu einigen ausgewählten Lagerschächten; und
Figur 2 eine schematische Draufsicht auf das in Figur 1 gezeigte Bediengerät neben einigen nebeneinander angeordneten Lagerschächten.

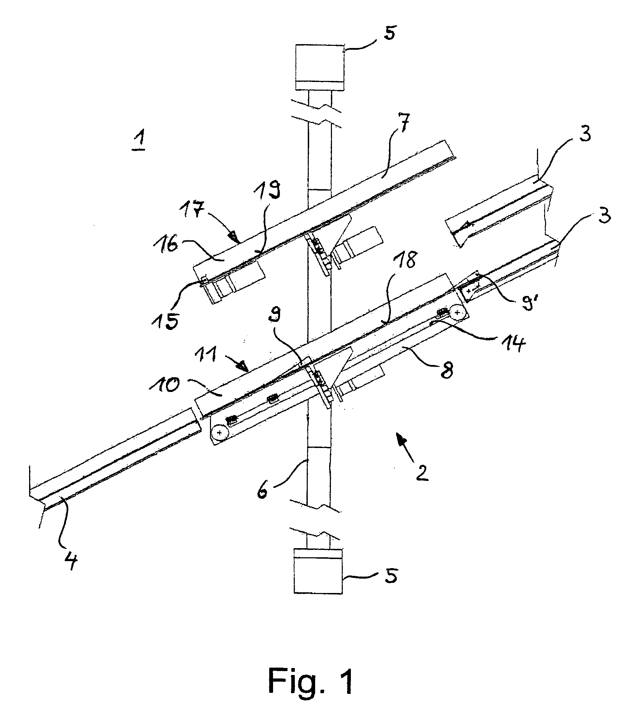

Figur 1 zeigt eine schematische Seitenansicht eines Ausschnitts eines automatisierten Lagers 1. Ein Bediengerät 2 ist in der Mitte zwischen zu dem Bediengerät hin abfallenden Lagerschächten 3 (von denen lediglich zwei gezeichnet sind) und vom Bediengerät 2 weg abfallenden Lagerschächten 4 (hier ist lediglich einer gezeigt) angeordnet. Die geneigten Lagerschächte 3 und 4 können jeweils eine Mehrzahl von Arzneimittelpackungen aufnehmen. Die Arzneimittelpackungen sind hintereinander in dem Schacht angeordnet, wobei der durch die Pakkungen gebildete Stapel am unteren Ende jedes Lagerschachts durch eine jeweilige Sperre gehalten wird. Bei den Lagerschächten 3 befinden sich die Sperren an dem dem Bediengerät 2 zugewandten Ende. Bei den Lagerschächten 4 befinden sich die Sperren an dem vom Bediengerät 2 abgewandten, in Figur 1 nicht gezeigten unteren Ende.

Das Bediengerät 2 ist in zwei Raumrichtungen verfahrbar, nämlich in einer großen Z-Achse entlang einer senkrechten Führungsschiene 6 sowie in einer X-Achse entlang einer am Fußboden und einer an der Decke montierten Führungsschiene 5. Das Bediengerät 2 weist zwei als "Greifer" bezeichnete Vorrichtungen 7 und 8 zum Aufnehmen von Arzneimittelpackungen auf. Die bei dem Ausführungsbeispiel gemäß Figur 1 unten dargestellte Greifer-Vorrichtung 8 weist eine geneigte Auflageebene 18 auf, über der zwei seitliche parallele Führungsbacken 10 derart geführt sind, daß zwischen den Führungsbacken 10 über der Auflageebene 18 ein geneigter Pufferschacht 11 gebildet wird. Das Bediengerät 2 weist ferner eine zweite Greifer-Vorrichtung 7 zum Aufnehmen von Arzneimittelpackungen auf. Die Greifer-Vorrichtung 7 weist ebenfalls eine geneigte Auflageebene 19 auf, über der zwei seitliche parallele Führungsbacken 16 derart angeordnet sind, daß zwischen den Führungsbacken 16 über der Auflageebene 19 ein zweiter Pufferschacht 17 gebildet wird.

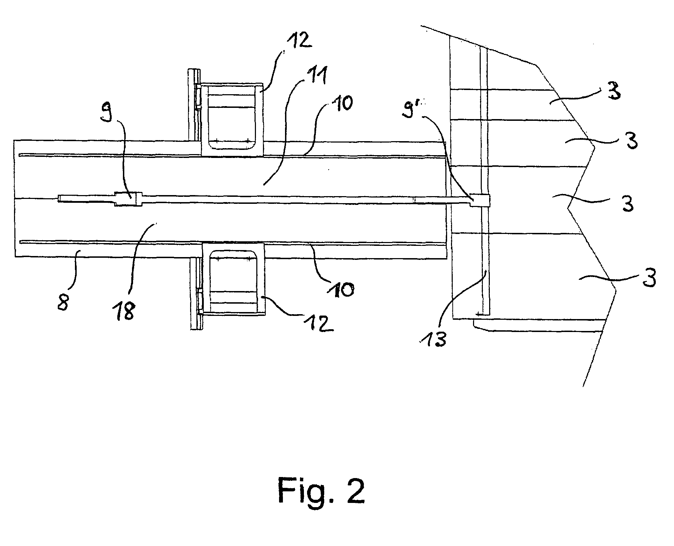

Figur 2 zeigt eine schematische Draufsicht auf einen Teil der in Figur 1 gezeigten Anordnung, nämlich eine Draufsicht auf die untere Greifer-Vorrichtung 8 und daneben angeordnete Lagerschächte 3. Wie in Figur 2 zu erkennen ist, sind die seitlichen Führungsbacken 10, die den Pufferschacht 11 seitlich begrenzen, jeweils mit Stellantrieben 12 verbunden. Mit Hilfe der Stellantriebe 12 können die Führungsbacken 11 über der Auflageebene 18 zusammen und auseinander gefahren werden, so daß die Breite des Pufferschachts 11 der Breite der darin enthaltenen Arzneimittelpackungen angepaßt werden kann.

Darüber hinaus ist in Figur 2 zu erkennen, daß die Breite der Lagerschächte 3 unterschiedlich ist, wobei die Breite den Breitenabmessungen der darin enthaltenen Arzneimittelpackungen angepaßt ist. An dieser Stelle sei bereits darauf hingewiesen, daß in jeden der Lagerschächte 3 unterschiedliche Arzneimittelpackungen eingelagert werden können, die auch unterschiedliche Breitenabmessungen aufweisen können. Allerdings sind die eingelagerten Arzneimittelpackungen insoweit an die Breite des Schachts angepaßt, als sie ein bestimmtes Maß nicht unterschreiten sollten, um beispielsweise die Gefahr eines Verkantens der Arzneimittelpackungen oder eines seitliches Verrutschens zu verringern. Gegebenenfalls kann in jedem Führungsschacht an dessen unterem Ende eine Einrichtung vorgesehen sein, die beim Einschieben der Arzneimittelpackungen dafür sorgt, daß diese eine definierte Lage im Schacht auch dann einnehmen, wenn ihre Breite geringer ist als die Breite des Schachts.

Bei dem in Figur 1 dargestellten Ausführungsbeispiel unterscheiden sich die untere Greifer-Vorrichtung 8 und die obere Greifer-Vorrichtung 7 wie folgt. Die untere Greifer-Vorrichtung 8 weist einen Schieber 9 auf, der einen in der Mitte des Pufferschachts 11 geführten, aus dem Boden 18 herausragenden Haltefinger umfaßt. Die in den Pufferschacht 11 nach unten rutschenden Packungen bleiben an dem Haltefinger des Schiebers 9 liegen. Mit Hilfe des Antriebs 14 (beispielsweise ein Seilzug mit Umlenkrollen) kann der Schieber 9 nach oben in Richtung des Lagerschachts 3 geschoben werden, wobei die in dem Pufferschacht 11 enthaltenen Packungen in den Lagerschacht 3 hineingeschoben werden. In den Figuren 1 und 2 ist der Schieber 9 jeweils in einer unteren Position und - als Schieber 9' - in einer oberen Position gezeigt. Die obere Position stellt diejenige Position dar, bei der der Schieber 9' soweit in den Lagerschacht 3 hineingefahren ist, daß sich die vor dem Schieber befindliche Arzneimittelpackung hinter einem Anschlag oder einer Sperre 13 des Lagerschachts befindet, so daß bei Aktivieren der Sperre 13 die Arzneimittelpackung im Lagerschacht 3 auch dann verbleibt, wenn der Schieber 9 in den Pufferschacht 11 zurückgefahren wird. Das Vorsehen des Schiebers 9 im unteren Pufferschacht 11 ermöglicht dessen Verwendung als Umlagerungsschacht. Aus einem Lagerschacht 3 entnommene Arzneimittelpackungen, die nach entsprechender Positionierung des oberen Endes des Pufferschachts 11 vor dem unteren Ende des Lagerschachts 3 und nach Freigabe der Sperre des Lagerschachts 3 in den Pufferschacht 11 hineingerutscht sind, können nach erneuter Positionierung des oberen Endes des Pufferschachts 11 an ein unteres Ende eines Lagerschachts 3 mit Hilfe des Schiebers 9 über die Sperre des Lagerschachts 3 hinweg in den Lagerschacht zurückgeschoben oder in einen anderen Lagerschacht hineingeschoben werden.

Die obere Greifer-Vorrichtung 7 mit dem Pufferschacht 17 weist bei dem in Figur 1 dargestellten Ausführungsbeispiel keinen Schieber, sondern lediglich einen als Auslagerungsnocken bezeichneten Anschlag 15 innerhalb des Pufferschachts 11 auf. In den Pufferschacht 17 hineinrutschende Arzneimittelpackungen werden an dessen unterem Ende durch den Auslagerungsnocken 15 gehalten. Der Pufferschacht 17 wird deshalb als Auslagerungsschacht bezeichnet. Zum Auslagern der im Pufferschacht 17 enthaltenen Arzneimittelpackungen fährt das Bediengerät 2 an eine Auslagerungsstation derart heran, daß das untere Ende des Pufferschachts 17 sich an einer Stelle befindet, an der die Arzneimittelpackungen auf eine Transporteinrichtung zur Ausgabestation übergeben werden können. Der Auslagerungsnocken 15 wird in den Boden 19 des Pufferschachts 17 zurückgefahren und die in dem Pufferschacht 17 enthaltenen Arzneimittelpackungen rutschen zur Auslagerungsstation.

Bei einem Ausführungsbeispiel kann auch der Haltefinger des Schiebers 9 unter den Boden 18 des Pufferschachts 11 gefahren werden, so daß die in dem Pufferschacht 11 enthaltenen Arzneimittelpackungen nach unten aus dem Pufferschacht hinausrutschen. Diese Möglichkeit kann beispielsweise verwendet werden, um die in den Pufferschacht 11 enthaltenen Arzneimittelpackungen an der Auslagerungsstation auszulagern oder - wie es in Figur 1 gezeigt ist - das untere Ende des Pufferschachts 11 an das obere Ende eines Lagerschachts 4 heranzufahren und einen Lagerschacht 4 mit Arzneimittelpackungen zu befüllen. Selbstverständlich kann auch der Pufferschacht 17 zum Befüllen der Lagerschächte 4 verwendet werden.

Bei alternativen Ausführungsformen kann sich die Greifer-Vorrichtung 7 des Bediengeräts 2 auch unterhalb oder neben der Greifer-Vorrichtung 8 befinden. Auch können mehr als zwei Greifer-Vorrichtungen vorgesehen sein. Darüber hinaus können beide Greifer-Vorrichtungen 7 und 8 mit einem Schieber 9 versehen sein.

Das Bediengerät 2 kann somit Arzneimittelpackungen in die Lagerschächte 3 sowohl einlagern als auch aus den Lagerschächten 3 auslagern. Darüber hinaus kann das Bediengerät 2 Arzneimittelpackungen in die Lagerschächte 4 einlagern. An den (in Figur 1 nicht gezeigten) unteren Enden der Lagerschächte 4 befinden sich Auslagerungsvorrichtungen zum Auslagern der in den Schächten 4 enthaltenen Arzneimittelpackungen, wobei die dort ausgelagerten Arzneimittelpackungen vorzugsweise auf ein Förderband ausgelagert werden. Die Lagerschächte 4 dienen (bedingt durch die Art der Auslagerung) zum Lagern von Arzneimittelpackungen jeweils derselben Art, so daß diese Schächte 4 vorzugsweise solche Arzneimittelpackungen sortenrein aufnehmen, die häufig und in größeren Stückzahlen benötigt werden. Die Lagerschächte 3 können sowohl sortenrein als auch gemischt gefüllt werden, wobei die darin enthaltenen Arzneimittelpackungen nicht nur verschiedenartig sein sondern auch verschiedene Abmessungen haben können. Deshalb dienen die Lagerschächte 3 vorzugsweise der Lagerung von Arzneimittelpackungen, die seltener und in geringeren Stückzahlen benötigt werden.

Das Einlagern von Arzneimittelpackungen kann beispielsweise wie folgt vorgenommen werden. Das Bediengerät 2 wird zu einer Einlagerungsstation gefahren. Dort wird der untere Pufferschacht 11 mit einer Arzneimittelpackung oder vorzugsweise mit mehreren Arzneimittelpackungen gleicher Art oder verschiedener Art befüllt. Zum Befüllen der sortenreinen Lagerschächte 4 kann an der Einlagerungsstation auch der obere Pufferschacht 17 mit gleichartigen Arzneimittelpackungen befüllt werden. Dann fährt das Bediengerät 2 zu den gewünschten Lagerschächten 3 bzw. 4. Sollen Arzneimittelpackungen in die Lagerschächte 3 eingelagert werden, so fährt das Bediengerät 2 derart an die Lagerschächte 3, daß sich das obere Ende des Pufferschachts 11 am unteren Ende des gewünschten Lagerschachts 3 befindet. Dann wird der Schieber 9 aktiviert und schiebt die Arzneimittelpackung bzw. die Arzneimittelpackungen nach oben in den Lagerschacht 3. Es kann vorgesehen sein, daß der Schieber 9 nur ein Teil der im Pufferschacht 11 enthaltenen Arzneimittelpackungen in den jeweiligen Lagerschacht 3 hineinschiebt und die verbleibenden wieder mit zurücknimmt. Die verbleibenden Arzneimittelpackungen können dann in einen anderen Lagerschacht 3 hineingeschoben oder nach unten in einen Lagerschacht 4 entlassen werden. Die in den Pufferschacht 17 der oberen Greifer-Vorrichtung 7 aufgenommenen Arzneimittelpackungen können in einen sortenreinen Lagerschacht 4 entlassen werden, nachdem das untere Ende des Pufferschachts 17 am oberen Ende des Lagerschachts 4 positioniert worden ist.

Während der gesamten Einlagerungsvorgänge überwacht eine Steuereinrichtung die Bewegungsabläufe und verfolgt, in welchen der Lagerschächte 3 oder 4 welche Arzneimittelpackungen an welcher Position eingelagert worden sind. Diese Informationen werden so innerhalb der Steuereinrichtung abgelegt, daß ein problemloses Wiederauffinden und späteres Auslagern einer beliebigen gewünschten Arzneimittelpackung möglich ist.

Das Auslagern von Arzneimittelpackungen kann auf verschiedene Weise geschehen. In dem sortenreinen Schacht 4 enthaltene Arzneimittelpackungen werden mit Hilfe der nicht dargestellten, am unteren Ende des Schachts 4 angeordneten Auslagerungsvorrichtung ausgelagert und auf eine Fördereinrichtung übergeben, wobei die Fördereinrichtung die ausgelagerten Arzneimittelpackungen zu einem gewünschten Ausgabeplatz transportiert. Zur Auslagerung eines an einer untersten Position eines Lagerschachts 3 befindlichen Arzneimittels (oder auch mehrerer an den untersten Positionen befindlicher Arzneimittelpackungen) genügt es, wenn beispielsweise die Greifer-Vorrichtung 7 mit ihrem oberen Ende an das untere Ende des Lagerschachts 3 heranfährt, die Sperre des Lagerschachts kurzzeitig freigegeben wird, so daß die gewünschten Arzneimittelpackungen in den Pufferschacht 17 hineinrutschen. Anschließend wird der Pufferschach 17 an eine Auslagerungsstation herangefahren und der Auslagerungsnocken 15 freigegeben, so daß die in dem Pufferschacht 17 enthaltenen auszulagernden Arzneimittelpackungen hinausrutschen können. Soll jedoch eine Arzneimittelpackung (oder auch mehrere Arzneimittelpackungen) ausgelagert werden, die sich nicht an der untersten Position im Lagerschacht 3 befindet, so wird wie folgt vorgegangen. Zunächst wird der Umlagerungs-Pufferschacht 11 an das untere Ende des Lagerschachts 3 herangefahren. Dann wird die Sperre des Lagerschachts 3 derart freigegeben, daß die unterhalb der gewünschten Arzneimittelpackung befindlichen, nicht auszulagernden Arzneimittelpackungen in den Pufferschacht 11 hineinrutschen. Dann wird der Auslagerungs-Pufferschacht 17 an das untere Ende des Lagerschachts 3 herangefahren, in dem sich jetzt die auszulagernde Arzneimittelpackung an der untersten Position befindet. Dann wird die Sperre des Lagerschachts 3 derart kurzzeitig freigegeben, daß die gewünschte Arzneimittelpackung in den Pufferschacht 17 hineinrutscht. Anschließend wird wieder der Pufferschacht 11 an das andere Ende des Lagerschachts 3 herangefahren. Dann werden die in dem Pufferschacht 11 enthaltenen nicht auszulagernden Arzneimittelpackungen mit Hilfe des Schiebers 9 zurück in den Lagerschacht 3 geschoben. Schließlich fährt das Bediengerät 2 zur Auslagerungsstation, wo die in den Auslagerungs-Pufferschacht 17 enthaltene Arzneimittelpackung (oder auch mehrere enthaltene Arzneimittelpackungen) durch Freigabe des Auslagerungsnockens 15 ausgelagert werden. Bei einer alternativen Ausführungsform, bei der eine schnellere Auslagerung gewünscht wird, kann das Bediengerät 2, bevor es die nicht auszulagernden Arzneimittelpackungen aus dem Pufferschacht 11 zurück in den Lagerschacht 3 schiebt, zunächst den Auslagerungspufferschacht 17 an die Auslagerungsstation heranfahren und die darin enthaltenen Arzneimittelpackungen auslagern. Darüber hinaus ist es auch denkbar, daß in dem Auslagerungs-Pufferschacht 17 eine Reihe von Arzneimittelpackungen (beispielsweise die zu einer Bestellung gehörenden bzw. auf einem Rezept aufgeführten Arzneimittelpackungen) gesammelt werden, bevor der Auslagerungs-Pufferschacht 17 an die Auslagerungsstation gefahren wird. Es ist auch denkbar, daß die Entscheidung, welche Reihenfolge gewählt wird, in Abhängigkeit davon getroffen wird, welchen optimalen Weg die Steuereinrichtung berechnet.

Im Rahmen des Erfindungsgedankens sind zahlreiche alternative Ausführungsformen denkbar. Beispielsweise könnten die Greifer-Vorrichtungen 7 und 8 um die Z-Achse drehbar ausgeführt sein, so daß sich zum Bediengerät 2 hin abfallende Lagerschächte 3 an beiden Seiten des Ganges, in dem das Bediengerät 3 sich entlang der X-Achse bewegt, angeordnet sein können. Die am unteren Ende der Lagerschächte 3 angeordnete Sperre kann sowohl einen eigenen Auslösemechanismus als auch einen vom Bediengerät ausgelösten Mechanismus aufweisen. Das Lagersystem eignet sich nicht nur für quaderförmige Arzneimittelpackungen, sondern darüber hinaus auch beispielsweise für Schuhkartons, Postpakete oder Flaschen. Es sind auch Ausführungsformen denkbar, bei dem mehrere Bediengeräte in dem Gang angeordnet sind oder bei dem die Greif-Vorrichtungen des Bediengeräts relativ zueinander bewegbar sind.

## Patentansprüche

1. Verfahren zum Auslagern wenigstens eines Stückguts aus einem automatisierten Lager für eine Vielzahl unterschiedlicher Stückgüter, wobei das Lager mehrere geneigte Lagerschächte und ein in wenigstens zwei Raumrichtungen verfahrbares Bediengerät aufweist, wobei jeder Lagerschacht an seinem unteren Ende eine erste Sperre zum Halten der in dem Lagerschacht liegenden Stückgüter aufweist, wobei das Bediengerät einen geneigten Pufferschacht, der mehrere Stückgüter aufnehmen kann, und eine weitere Einrichtung zur Aufnahme wenigstens eines Stückguts aufweist,
wobei sich das wenigstens eine auszulagernde Stückgut an einer bekannten Position innerhalb einer Reihe von in einem Lagerschacht enthaltenen Stückgütern befindet,
wobei:
a) das Bediengerät derart an den Lagerschacht herangefahren wird, daß sich das obere Ende des Pufferschachts an dem unteren Ende des Lagerschachts befindet,
b) die erste Sperre derart freigegeben wird, daß wenigstens ein in dem Lagerschacht vor dem auszulagernden Stückgut enthaltenes Stückgut in den Pufferschacht eintritt und sich ein erstes der auszulagernden Stückgüter an die unterste Position des Lagerschachts bewegt,
c) das Bediengerät derart an den Lagerschacht herangefahren wird, daß sich die weitere Einrichtung zur Aufnahme wenigstens eines Stückguts an dem unteren Ende des Lagerschachts befindet,
d) die erste Sperre derart freigegeben wird, daß sich zumindest das erste der auszulagernden Stückgüter in die weitere Einrichtung zur Aufnahme bewegt, und
e) das Bediengerät zu einer Abgabestelle gefahren und das wenigstens eine auszulagernde Stückgut aus der weiteren Einrichtung zur Aufnahme entnommen wird.

2. Verfahren nach Anspruch 1, **dadurch gekennzeichnet, daß** der Pufferschacht von einem ersten Pufferschacht und die weitere Einrichtung zur Aufnahme wenigstens eines Stückguts von einem zweiten Pufferschacht gebildet wird, wobei im Schritt c) das Bediengerät derart an den Lagerschacht herangefahren wird, daß sich das obere Ende des zweiten Pufferschachts an dem unteren Ende des Lagerschachts befindet.

3. Verfahren nach Anspruch 2, **dadurch gekennzeichnet, daß** entweder nach dem Schritt d) und vor dem Schritt e) oder nach dem Schritt e) das Bediengerät derart an den Lagerschacht herangefahren wird, daß sich wieder das obere Ende des ersten Pufferschachts an dem unteren Ende des Lagerschachts befindet, und die in dem ersten Pufferschacht enthaltenen Stückgüter in den Lagerschacht hinaufgeschoben werden.

4. Verfahren nach Anspruch 2 oder 3, **dadurch gekennzeichnet, daß** das wenigstens eine auszulagernde Stückgut im Schritt e) aus dem zweiten Pufferschacht entnommen wird, indem es mittels Freigabe einer an dem unteren Ende des zweiten Pufferschachts angeordneten zweiten Sperre nach unten zu der Abgabestelle entlassen wird.

## Claims

1. A method for releasing at least one piece of packaged goods from an automated storage for a plurality of different packaged goods, wherein the storage encompasses several inclined storage shafts and a control set, which can be moved in at least two spatial directions, wherein each storage shaft encompasses at its lower end a first safety catch for holding the packaged goods located in the storage shaft, wherein the control set encompasses an inclined buffer shaft, which can accommodate several pieces of packaged goods, and a further device for accommodating at least one piece of packaged goods,
wherein the at least one piece of packaged goods, which is to be released, is located at a known position within a number of pieces of packaged goods, which are contained in a storage shaft,
wherein:
a) the control set is moved towards the storage shaft in such a manner that the upper end of the buffer shaft is located at the lower end of the storage shaft,
b) the first safety catch is released in such a manner that at least one piece of packaged goods, which is contained in the storage shaft upstream of the packaged goods, which are to be released, enters into the buffer shaft and a first piece of the packaged goods, which are to be released, moves towards the lowermost position of the storage shaft,
c) the control set is moved towards the storage shaft in such a manner that the further device for accommodating at least one piece of packaged goods is located at the lower end of the storage shaft,
d) the first safety catch is released in such a manner that at least the first piece of the packaged goods, which are to be released, moves into the further device for accommodating and
e) the control set is moved to a delivery location and the at least one piece of packaged goods, which is to be released, is removed from the further device for accommodating.

2. The method according to claim 1, **characterized in that** the buffer shaft is formed by a first buffer shaft and the further device for accommodating at least one piece of packaged goods is formed by a second buffer shaft, wherein in step c) the control set is moved towards the storage shaft in such a manner that the upper end of the second buffer shaft is located at the lower end of the storage shaft.

3. The method according to claim 2, **characterized in that** the control set is moved towards the storage shaft in such a manner that the upper end of the first buffer shaft is again located at the lower end of the storage shaft and that the packaged goods contained in the first buffer shaft are pushed up into the storage shaft either after the step d) or prior to the step e) or after the step e).

4. The method according to claim 2 or 3, **characterized in that** the at least one piece of packaged goods, which is to be released, is removed from the second buffer shaft in step e) **in that** it is ejected downwards to the delivery location by means of releasing a second safety catch, which is arranged at the lower end of the second buffer shaft.

## Revendications

1. Procédé de déstockage d'au moins une marchandise au détail d'un entrepôt automatisé pour une pluralité de marchandises au détail différentes, dans lequel l'entrepôt présente plusieurs puits d'entrepôt inclinés et un appareil de manipulation pouvant être déplacé dans au moins deux directions spatiales, moyennant quoi chaque puits d'entrepôt présente à son extrémité inférieure un premier mécanisme de verrouillage pour contenir les marchandises au détail se trouvant dans le puits d'entrepôt, moyennant quoi l'appareil de manipulation présente une fosse d'isolation inclinée, qui peut renfermer plusieurs marchandises au détail et un autre dispositif pour renfermer au moins une marchandise au détail,
moyennant quoi au moins une marchandise au détail se trouve à une position connue à l'intérieur d'une rangée de marchandises au détail contenues dans un puits d'entrepôt,
moyennant quoi :
a) l'appareil de manipulation est approché du puits d'entrepôt de telle sorte que l'extrémité supérieure de la fosse d'isolation se trouve à l'extrémité inférieure du puits d'entrepôt,
b) le premier mécanisme de verrouillage est débloqué de telle sorte que au moins une marchandise au détail contenue dans le puits d'entrepôt avant la marchandise au détail à déstocker entre dans la fosse d'isolation et une première des marchandises au détail à déstocker se déplace à la position la plus basse du puits d'entrepôt,
c) l'appareil de manipulation est approché du puits d'entrepôt de telle sorte que l'autre dispositif de réception d'au moins une marchandise au détail se trouve à l'extrémité inférieure du puits d'entrepôt,
d) le premier mécanisme de verrouillage est débloqué de telle sorte que au moins la première des marchandises au détail à déstocker se déplace dans l'autre dispositif de réception, et
e) l'appareil de manipulation est amené à un emplacement de restitution et au moins une marchandise au détail déstocker est retirée de l'autre dispositif de réception.

2. Procédé selon la revendication 1, **caractérisé en ce que** la fosse d'isolation est formée par une première fosse d'isolation et l'autre dispositif de réception d'au moins une marchandise au détail par une deuxième fosse d'isolation, moyennant quoi à l'étape c) l'appareil de manipulation est approché de la fosse d'isolation de telle sorte que l'extrémité supérieure de la deuxième fosse d'isolation se trouve à l'extrémité inférieure du puits d'entrepôt.

3. Procédé selon la revendication 2, **caractérisé en ce que** soit après l'étape d) et avant l'étape e) ou après l'étape e), l'appareil de manipulation est approché du puits d'entrepôt de telle sorte que l'extrémité supérieure de la première fosse d'isolation se retrouve à l'extrémité inférieure du puits d'entrepôt et les marchandises au détail contenues dans la première fosse d'isolation sont glissées dans le puits d'entrepôt.

4. Procédé selon la revendication 2 ou 3, **caractérisé en ce que** au moins une marchandise au détail à déstocker est retirée à l'étape e) de la deuxième fosse d'isolation, en la démobilisant vers le bas vers l'emplacement de restitution au moyen du déblocage d'un deuxième mécanisme de verrouillage disposé à l'extrémité inférieure de la deuxième fosse d'isolation.
